# EUROPÄISCHE PATENTANMELDUNG

(11) **EP 0 936 379 A2**
(43) Veröffentlichungstag der Anmeldung: **18.08.1999**
(21) Anmeldenummer: 99102519.8
(22) Anmeldetag: 10.02.1999
(51) Int. Cl.: F16H 3/44

(54) **Planetengetriebe**

(30) Priorität: 14.02.1998 DE 19806130; 16.09.1998 DE 29816632 U; 16.09.1998 DE 29816635 U
(71) Anmelder: Dewert Antriebs- und Systemtechnik GmbH & Co. KG, D-32278 Kirchlengern (DE)
(72) Erfinder: Bokämper, Ralf, Dipl.-Ing., 32312 Lübbecke (DE)
(74) Vertreter: Stracke, Alexander, Dipl.-Ing.

(57) **Zusammenfassung**

Bei einem Planetengetriebe mit einem eingangsseitigen, feststehenden Hohlrad, einem abtriebseitigen, drehbaren Hohlrad, bei dem sich die Planetenräder auf einem Sonnenrad und einem in der Zentralachse des Planetenrades liegenden Stützrad abstützen, sollen bei Einhaltung der kompakten Bauweise die Reibungsverluste so gering wie möglich sein. Außerdem soll ein hoher Wirkungsgrad erzielt werden und das Spiel der in Eingriff stehenden Räder soll so gering wie möglich sein. Darüberhinaus soll das Drehzahlverhältnis zwischen der Eingangs- und der Ausgangsseite des Planetengetriebes gegenüber den bekannten Versionen erhöht werden.

Gemäß einem ersten Vorschlag ist dem abtriebsseitigen Hohlrad (15) an der dem Sonnenrad (13) der Räderanordnung zugewandten Seite ein in die Bohrung des Stützrades (16) eingreifender Zapfen (15b, 28) zugeordnet, auf dem das Stützrad (16) frei drehbar oder drehfest gelagert ist. Gemäß einem zweiten Vorschlag ist vorgesehen, daß jedes Planetenrad (17) zumindest an der dem Abtriebsflansch (18) zugewandten Seite einen vorstehenden Führungszapfen (21) aufweist, vorzugsweise jedoch an beiden Stirnseiten einen vorstehenden Führungszapfen (21, 22) aufweist, die in Ringnuten (23, 24) des Abtriebsflansches (18) und des Gehäuses (10) geführt sind. Ob das Stützrad frei drehbar auf dem Bolzen oder drehfest auf diesem aufgesetzt ist, richtet sich nach dem Abtrieb des Planetengetriebes.

Das Planetengetriebe ist besonders für den unteren Leistungsbereich geeignet.

## Beschreibung

Die Erfindung betrifft ein Planetengetriebe mit einem feststehenden Getriebegehäuse, welches durch einen Deckel verschlossen ist, mit einem rotierend antreibbaren Innenrad, dessen Drehachse die Zentralachse des Getriebes bildet, mit einem feststehenden antriebsseitigen und mit einer Innenverzahnung versehenen Hohlrad und einem drehbaren, abtriebsseitigen mit einer Innenverzahnung versehenen Hohlrad sowie mindestens einem mit den Hohlrädern und dem Sonnenrad in Eingriff stehenden Planetengetriebe und mit einem mit seiner Längsachse in der Zentralachse des Planetengetriebes liegenden Stützrad, welches mit dem Planetenrad oder mit mehreren Planetenrädern in Eingriff steht.

Das in Rede stehende Planetengetriebe wird auch als Umlaufgetriebe bezeichnet und ist in vielen Ausführungen bekannt. Besonders bevorzugt sind Zahnradgetriebe, bei denen sich zumindest ein Planetenrad außer um die eigene Achse, der sogenannten Umlaufachse, auch um die Zentralachse dreht.

Der Vorteil derartiger Getriebe liegt darin, daß das Drehzahlverhältnis zwischen dem Antriebszapfen und dem Abtriebszapfen äußerst hoch ist und daß trotzdem, bedingt durch die verhältnismäßig geringe Anzahl von Rädern eine relativ kompakte Bauweise erreicht wird.

Das Einsatzgebiet ist vielfältig, beispielsweise auch als Antriebe für Regeleinrichtungen, Verstellantriebe im Maschinenwesen und dergleichen.

Da heutzutage viele Verstellungen, die früher von Hand durchgeführt wurden, motorisch durchgeführt werden, werden kompakte Lösungen bevorzugt, da die Einbauräume in vielen Fällen nicht an die Abmessungen des Getriebes angepaßt werden können. Außerdem werden insbesondere bei Gegenständen für den täglichen Gebrauch hohe Stückzahlen benötigt, die außerdem noch preiswert sein sollen. Es werden deshalb die äußerst kompakten steglosen Planetengetriebe bevorzugt, bei denen sich das Planetenrad bzw. die Planetenräder auf dem Stützrad abstützen. Diese Getriebe weisen von der Antriebs- bis zur Abtriebsseite eine in sich geschlossene Räderkette auf. Derartige Getriebe sind nicht nur besonders kompakt, sondern auch mittels eines Montageroboters bzw. eines Montageautomaten montierbar.

Der Erfindung liegt die Aufgabe zugrunde, ein Planetengetriebe der eingangs näher beschriebenen Art so auszubilden, daß bei Einhaltung der kompakten Bauweise die Reibungsverluste so gering wie möglich sind, so daß der Wirkungsgrad erhöht wird und daß das Spiel der in Eingriff stehenden Räder so gering wie möglich gehalten wird und daß das Drehzahlverhältnis zwischen der Eingangs- und der Ausgangsseite des Planetengetriebes erhöht werden kann.

Gemäß einem ersten Vorschlag ist vorgesehen, daß dem abtriebsseitigen Hohlrad an der dem Sonnenrad der Räderanordnung zugewandten Seite ein in die Bohrung des Stützrades eingreifender Zapfen zugeordnet ist, auf dem das Stützrad frei drehbar oder drehfest gelagert ist.

Ob das Stützrad frei drehbar auf dem Bolzen oder drehfest auf diesem aufgesetzt ist, richtet sich nach dem Abtrieb des Planetengetriebes. Der in die Bohrung des Stützrades eingreifende Zapfen kann durch Anformung an das abtriebsseitige Hohlrad einstückig mit diesem ausgebildet sein oder Teil eines Abtriebszapfens sein, der drehbar im abtriebsseitigen Hohlrad gelagert ist. Durch diesen Zapfen wird das Planetengetriebe an einer kritischen Stelle stabilisiert. Durch die an die Bauteile angepaßte Formgebung werden die Abmessungen des Planetengetriebes nicht erhöht. Es werden insbesondere die sich auf dem Stützrad abwälzenden Planetenräder zusätzlich geführt, so daß die Reibung vermindert und der Wirkungsgrad entsprechend erhöht wird. Das abtriebsseitige Hohlrad wird noch zusätzlich fixiert, wenn dieser Zapfen das freie Stirnende des Motorzapfens kontaktiert. Der Motorzapfen ist dabei als ein ortsfestes Bauteil anzusehen. Zur Verminderung der Reibung ist der Zapfen an dem dem Motorzapfen zugewandten Stirnende ballig gestaltet. Dadurch wird eine kleinstmögliche Kontaktfläche geschaffen. gemäß einer anderen Ausführung ist vorgesehen, daß zumindest der Zapfen an der der Motorwelle zugewandten Seite eine Ausnehmung aufweist, in der eine Kugel gelagert ist. Das abtriebsseitige Hohlrad kann aus einem Metall oder aus einem Kunststoff gefertigt sein. Da der Motorzapfen immer aus Stahl hergestellt ist, sollte die Kugel aus einem geeigneten Material bestehen. Dazu käme auch ein Kunststoff oder ein Metall in Frage. Der Werkstoff der Kugel ist demzufolge vom Material des Motorzapfens und des abtriebsseitigen Hohlrades abhängig. Insbesondere wenn das Hohlrad aus einem Kunststoff gefertigt ist, ist es vorteilhaft, wenn der Zapfen als Hohlzapfen ausgebildet ist, da dann eine Materialanhäufung vermieden wird.

Gemäß einem zweiten Vorschlag zur Lösung der gestellten Aufgabe ist vorgesehen, daß jedes Planetenrad zumindest an der dem Abtriebsflansch zugewandten Seite einen vorstehenden Führungszapfen, vorzugsweise jedoch an beiden Stirnseiten einen vorstehenden Führungszapfen aufweist, der bzw. die in Ringnuten des Abtriebsflansches und des Bodens des Gehäuses geführt sind.

Sofern die Planetenräder aus Kunststoff bestehen, können die Führungszapfen beim Spritzvorgang mit angespritzt werden. Sind die Planetenräder jedoch aus Metall, könnten die Führungszapfen vorteilhafterweise durch einen in eine Bohrung des Planetenrades fest eingesetzten Bolzen gebildet werden. Die Führungszapfen sind besonders bei solchen Planetengetrieben vorteilhaft, die Drehmomente im mittleren und oberen Bereich übertragen.

Durch die Führungszapfen bzw. durch den Führungszapfen werden die Planetenräder zusätzlich geführt und stabilisiert.

In Weiterbildung des ersten Vorschlages zur Lösung der gestellten Aufgabe ist vorgesehen, daß in die Bohrung des losen Stützrades ein Abtriebszapfen drehfest eingesetzt ist, der vorzugsweise im abtriebsseitigen Hohlrad drehbar gelagert ist und dessen freies Ende gegenüber dem freien Ende einer Nabe des abtriebsseitigen Hohlrades vorsteht. Da der Abtriebszapfen mit geringstmöglichem Spiel im abtriebsseitigen Hohlrad gelagert ist, wird das Stützrad und somit auch die damit in Eingriff stehenden Planetenräder exakt geführt.

Da die Drehzahlen des Stützrades und des Abtriebsflansches bzw. des abtriebsseitigen Hohlrades nicht übereinstimmen, besteht nunmehr die Möglichkeit, wahlweise die Drehzahl des Abtriebszapfens oder des Abtriebsflansches als Eingangsdrehzahl für eine nachgeschaltete Baueinheit abzunehmen. Im Normalfall ist die Drehzahl des Abtriebszapfens größer als die des Abtriebsflansches. Im Bedarfsfall könnten auch beide Drehzahlen als Eingangsdrehzahlen für zwei Baueinheiten benutzt werden. Dadurch wird das Einsatzgebiet des Planetengetriebes noch weiter erhöht. Wahlweise könnte beispielsweise eine Kupplung auf das Ende des Abtriebszapfens oder auf die Habe des abtriebsseitigen Hohlrades aufgesetzt werden. Zur Stabilisierung der Hohlräder und der Räderanordnung könnten diese innerhalb eines Gehäusetopfes liegen, welcher schließend in das Gehäuse des Planetengetriebes eingesetzt ist.

Die die geschlossene Räderkette bildenden Räder sind in einer ersten Ausführung als Stirnräder ausgebildet. Zur weiteren Geräuschminderung könnten die Räder schräg verzahnt sein, wobei die erste Stufe des Getriebes durch das eingangsseitige Hohlrad und die zweite Stufe des Getriebes durch das abtriebsseitige Hohlrad bestimmt ist. Die Räder der zur zweiten Stufe gehörenden Räder könnten dann gleich oder gegensinnig zu den Rädern der ersten Stufe verzahnt sein, so daß sich bei der gegensinnigen Verzahnung die Axialkräfte aufheben würden. In weiterer Ausgestaltung ist jedoch auch vorgesehen, daß die Räder der in sich geschlossenen Räderkette als Reibräder ausgebildet sind. Diese Ausführung ist einfach und vorteilhaft, insbesondere wenn relativ kleine Drehmomente übertragen werden. Außerdem wird die Herstellung wesentlich vereinfacht, da die Räder beispielsweise im Spritzgußverfahren hergestellt werden können.

Im Normalfall ist das Planetengetriebe ein nicht selbsthemmendes Getriebe. Es gibt viele Anwendungsmöglichkeiten, bei denen eine an das Planetengetriebe angeschlossene Verstelleinrichtung in zwei entgegengesetzten Bewegungsrichtungen ausschließlich durch den Antriebsmotor bewegt wird, d. h. die Verstelleinrichtung könnte beispielsweise die Aufwärtsbewegung und die Abwärtsbewegung ausschließlich bei in Betrieb gesetztem Antriebsmotor ausführen. In solchen Fällen ist es ausreichend, wenn das Planetengetriebe nicht selbsthemmend ist. Es gibt jedoch viele Anwendungsmöglichkeiten, bei denen die zu verstellende Verstelleinheit innerhalb des Stellbereiches in vielen Stellungen verharren soll, selbst dann, wenn sie belastet wird. Für diesen Fall ist vorgesehen, daß das Getriebe als drehrichtungsumkehrbares Getriebe ausgelegt ist, jedoch in der umgekehrten Drehrichtung selbsthemmend ist, d. h. wenn der Abtriebszapfen von der angeschlossenen Verstelleinheit angetrieben wird. Anstelle der in einer Richtung selbsthemmenden Ausführung ist auch vorgesehen, daß das Planetengetriebe und/oder der das Planetengetriebe antreibende Antriebsmotor mit jeweils einer Bremse ausgerüstet ist, der vorzugsweise eine die Bremskraft steuernde Regeleinrichtung zugeordnet ist.

Alternativ könnte jedoch auch das Planetengetriebe so ausgelegt werden, daß innerhalb der in sich geschlossenen Räderanordnung bei der Umkehr der Drehrichtung, d. h. wenn das Abtriebsglied antreibend wirkt, eine Blockierung eintritt. Eine weitere Stabilisierung der Räderanordnung ist gegeben, wenn das abtriebsseitige Hohlrad an der dem antriebsseitigen Hohlrad zugewandten Seite einen vorstehenden und hohl ausgebildeten Ansatz aufweist, auf dem ein Wälzlager aufgesetzt ist. Es könnte jedes Planetenrad eine zum antriebsseitigen Hohlrad offene Ausnehmung aufweisen, in die eine durch eine Druckfeder belastete Kugel teilweise eingreift.

Eine weitere Lösung zur Erzielung der Selbsthemmung ist gegeben, wenn dem abtriebsseitigen Hohlrad ein Bremselement, beispielsweise ein Schlingfederbremselement zugeordnet ist. Dieses Bremselement kann direkt auf den Außenumfang des abtriebsseitigen Hohlrades wirken. Sofern jedoch dieses Hohlrad in einer Lagerhülse gelagert ist, ist vorgesehen, daß es mit einem zylindrischen Bremsglied drehfest verbunden ist, auf dessen Umfangsfläche das Bremselement angreift. Sofern dieses ein Schlingfederbremselement ist, ist es vorteilhaft, wenn die Drähte einen viereckigen, vorzugsweise quadratischen Querschnitt aufweisen. Es wird dann eine größtmögliche Reibfläche zwischen dem Schlingfederbremselement und dem zylindrischen Bremsglied erreicht. Außerdem wirkt dieses Bremselement dann gegebenenfalls auch als Rutschkupplung.

Für bestimmte Einsatzfalle, beispielsweise im Möbelbereich, kann es notwendig werden, daß eine an das Planetengetriebe angeschlossene Verstelleinheit mit hoher Geschwindigkeit abgesenkt werden muß. Da das Absenken normalerweise bei eingeschaltetem Antriebsmotor erfolgt, müßte an einer geeigneten Stelle der Verstelleinheit oder des Planetengetriebes eine sogenannte Ausrückung erfolgen. Bei den zuvor beschriebenen Anwendungen ist das antriebsseitige Hohlrad fest mit dem Gehäuse des Planetengetriebes verbunden oder die Verzahnung ist einstückig mit dem Gehäuse. Zur Ausrückbarkeit des Planetengetriebes ist vorgesehen, daß das antriebsseitige Hohlrad drehbar im Gehäuse gelagert ist, jedoch mittels eines Haltegliedes im Normalbetrieb festgesetzt ist. Dieses Halteglied könnte beispielsweise aus einer oder mehreren Bremsbacken bestehen, so daß zum Ausrücken des Planetengetriebes die Bremsbacken gelöst werden. Da dann außerdem noch die Bremskraft reguliert werden kann, erfolgt das Absenken an einer angeschlossenen Verstelleinheit mit einer veränderbaren von Fall zu Fall zu bestimmenden Geschwindigkeit.

Anhand der beiliegenden Zeichnungen wird die Erfindung noch näher erläutert.

Es zeigen:
- Figur 1: eine erste Ausführung des erfindungsgemäßen Planetengetriebes im vertikalen Schnitt,
- Figur 2: ein zweites Ausführungsbeispiel des erfindungsgemäßen Planetengetriebes im vertikalen Schnitt,
- Figuren 3-7: das erfindungsgemäße Planetengetriebe in fünf weiteren und verschiedenen Ausführungen,
- Figur 8: den das Planetengetriebe antreibenden Motor in perspektivischer und aufgebrochener Darstellung mit Blick auf das antriebsseitige Hohlrad und die Planetenräder.

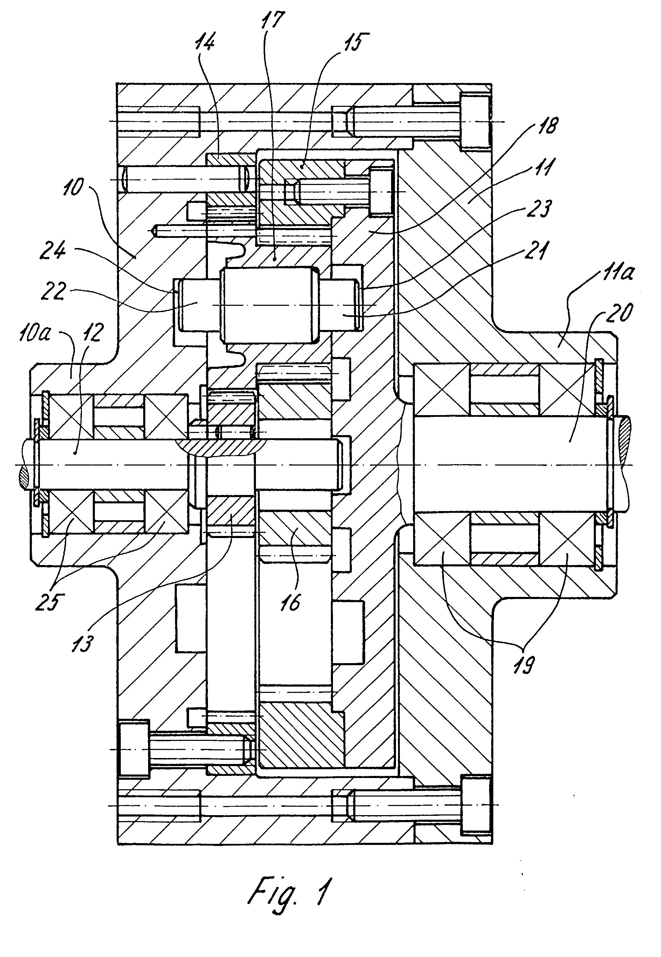

Das in der Figur 1 dargestellte steglose Planetengetriebe hat eine noch näher erläuterte, in sich geschlossene Räderanordnung, die innerhalb eines Gehäuses 10 angeordnet ist. Das Gehäuse 10 ist mittels eines verschraubten Deckels 11 verschlossen. An das Gehäsue 10 ist eine nach außen vorstehende Nabe 10a und an den Deckel eine nach außen vorstehende Nabe 11a angeformt. Die Naben 10a und 11a liegen fluchtend zueinander. In der Nabe 10a des Bodens des Gehäuses 10 ist ein Antriebszapfen 12 mittels Wälzlagern 25 gelagert. Dieser Antriebszapfen 12 kann der Zapfen eines nicht dargestellten, elektrischen Antriebsmotors sein oder der Antriebszapfen 12 kann mittels einer Kupplung mit der Motorwelle verbunden sein.

Direkt neben der Innenfläche des Bodens des Gehäuses 10 ist auf dem Antriebszapfen 12 ein als Stirnrad ausgebildetes Sonnenrad 13 drehfest aufgesetzt. Auf gleicher Höhe wie das Sonnenrad 13 ist in das Gehäuse 10 ein erstes Hohlrad 14 eingesetzt, welches mit dem Getriebegehäuse 10 verstiftet ist, so daß dieses Hohlrad 14 fest steht. Der Außendurchmesser des Hohlrades 14 stimmt mit dem Innendurchmesser des Gehäuses 10 überein. Demzufolge ist der Nenndurchmesser ein klein wenig kleiner als der Innendurchmesser des Gehäuses 10. Im Gegensatz zu der dargestellten Ausführung könnte das Hohlrad 14 bei einem entsprechenden Herstellverfahren einstückig mit den seitlichen Wandungen des Gehäuses 10 sein.

Direkt neben dem ersten Hohlrad 14 ist ein zweites Hohlrad 15 angeordnet, welches ebenfalls mit einer Innenverzahnung versehen ist, deren Nenndurchmesser ein klein wenig geringer ist als der des Hohlrades 24. Direkt neben dem Sonnenrad 13 ist ein im dargestellten Ausführungsbeispiel als Stirnrad ausgebildetes Stützrad 16 angeordnet. Die Breite des Sonnenrades 13 stimmt mit der Breite des ersten Hohlrades 14 überein. Ferner stimmt die Breite des zweiten Hohlrades 15 mit der Breite des Stützrades 16 überein. Der Nenndurchmesser des Hohlrades 15 ist ein klein wenig größer als der des Sonnenrades 13. Die Innenverzahnungen des ersten Hohlrades 14 und des zweiten Hohlrades 15 stehen je nach Ausführung des Planetengetriebes mit ein oder mehreren Planetenrädern 17 in Eingriff, die außerdem mit dem Sonnenrad 13 und dem Stützrad 16 in Eingriff stehen.

Die Außenverzahnung jedes Planetenrades 17 ist entsprechend den unterschiedlichen Durchmessern gestuft. Das zweite Hohlrad 15 ist mit einem durchmessergleichen Abtriebsflansch 18 durch Schrauben fest verbunden. An den Abtriebsflansch 18 ist ein in der Nabe 11a des Deckels 11 mittels Wälzlager 19 gelagerter Abtriebszapfen 20 angesetzt. Im Ausführungsbeispiel nach der Figur 1 ist der Durchmesser der zentrischen Bohrung des Stützrades 16 deutlich größer als der Außendurchmesser des Antriebszapfens 12. Bei dieser gezeichneten Ausführung sind zur Führung des Stützrades 16 mindestens zwei Planetenräder 17 erforderlich, die um einen Winkel von 180° zueinander versetzt sind. Es sind jedoch auch mehr als zwei Planetenräder 17 möglich. Bei einer solchen Ausführung ist es ausreichend, wenn der Antriebszapfen 12 sich nur noch durch die Bohrung des Sonnenrades 13 erstreckt. Soll jedoch das Planetengetriebe ausschließlich mit einem Planetenrad 17 ausgerüstet werden, ist es notwendig, daß das Stützrad 16 lose auf den Antriebszapfen 12 aufgesetzt wird, da es im Betrieb des Planetengetriebes eine Relativbewegung ausführt und sich der Antriebszapfen 12 dreht.

Die dargestellte Ausführung hat den Vorteil, daß das dem Abtriebsflansch 18 zugeordnete Ende des Antriebszapfens 12 noch im Abtriebsflansch 18 gelagert werden kann. Im Gegensatz zu der dargestellten Ausführung ist es nicht unbedingt notwendig, daß das Stützrad 16 als Stirnrad ausgebildet ist. Es könnte beispielsweise als Reibrad ausgebildet sein, um das Planetenrad 17 bzw. die Planetenräder 17 abzustützen.

Zur besseren Führung des Planetenrades 17 bzw. der Planetenräder 17 sind diese im dargestellten Ausfühungsbeispiel an beiden Stirnseiten mit vorstehenden Führungszapfen 21, 22 versehen, die in lagegerecht dazu angeordneten Ringnuten 23, 24 des Abtriebsflansches 18 und des Bodens des Gehäuses 10 geführt sind.

Es ergibt sich, daß aus dem Sonnenrad 13, dem Planetenrad 17 bzw. den Planetenrädern 17, den Hohlrädern 14, 15 und den, Stützrad 16 eine in sich geschlossene Räderanordnung gebildet wird, so daß auf die bislang notwendigen Stege und die dadurch notwendigen Bolzen verzichtet werden kann. Da die Breite des Planetengetriebes durch die Breite der beiden Hohlräder 14, 15 bestimmt wird, ist das erfindungsgemäße Planetengetriebe wesentlich kompakter als die bislang bekannten Ausführungen. Da die Stege und Bolzen entfallen, wird sinngemäß für die geschlossene Räderanordnung ein Stecksystem angeboten, welches montagefreundlich ist.

Wenn der Antriebszapfen 12 durch den nicht dargestellten Antriebsmotor in Drehung versetzt wird, treibt das Sonnenrad 13 das Planetenrad 17 bzw. die Planetenräder 17 an. Da sie sich in der Innenverzahnung des ersten, feststehenden Hohlrades 14 und der Innenverzahnung des drehfähigen Hohlrades 15 abwälzen, wird durch die unterschiedlichen Nenndurchmesser das zweite Hohlrad 15 mit einer gegenüber dem Sonnenrad 13 wesentlich verringerten Drehzahl angetrieben. Das Stützrad 16 verhindert dabei ein Kippen des Planetenrades 17 bzw. der Planetenräder 17, so daß die Verzahnungen korrekt in Eingriff stehen. Durch die Verbindung des Abtriebsflansches 18 mit dem zweiten Hohlrad 15 wird dieser und somit auch der Abtriebszapfen 20 mit gleicher Drehzahl angetrieben.

Das erfindungsgemäße Planetengetriebe ist zur Übertragung von relativ geringen Drehmomenten aber auch von extrem hohen Drehmomenten geeignet. Bis zu einem bestimmten Größenbereich könnten alle Bauteile mit Ausnahme der Wälzlager und gegebenenfalls der Schrauben aus Kunststoff im Spritzgrußverfahren hergestellt werden.

Ab einem bestimmten Größenbereich müßten die Bauteile aus geeigneten Metallen gefertigt werden. In nicht näher dargestellter Weise wird an den Abtriebszapfen 20 eine mechanische Stelleinheit angeschlossen. Je nach Art dieser Verstelleinheit wird ein zu verstellendes Bauteil nach oben bei eingeschaltetem Antriebsmotor verstellt. Die entgegengesetzte Bewegung könnte ebenfalls bei entsprechend geringer Geschwindigkeit auch bei eingeschaltetem Antriebsmotor durchgeführt werden, der dann gegengesteuert werden müßte. Bei einem solchen Einsatzfall darf das Getriebe nicht selbsthemmend sein.

Übliche Einsatzfälle sind jedoch, daß das zu verstellende Bauteil der mechanischen Verstelleinheit innerhalb des Verstellbereiches in jeder Stellung verbleiben muß und dabei auch noch belastbar sein soll. In diesem Fall könnte der Antriebsmotor beispielsweise ein Bremsmotor sein. Es ist jedoch in weiterer Ausgestaltung des Planetengetriebes denkbar, daß zumindest ein Rad der Räderanordnung so gestaltet ist, daß bei abgeschaltetem Antriebsmotor eine Blockierung eintritt. Es gibt jedoch auch Einsatzfälle, bei denen im Normalfall beide Bewegungen des zu verstellenden Bauteiles der Verstelleinheit bei eingeschaltetem Antriebsmotor mit der entsprechenden Geschwindigkeit durchgeführt werden sollen. Es besteht dann häufig noch die Forderung, daß in bestimmten Situationen, beispielsweise in Notsituationen, die abwärts gerichtete Rückbewegung mit extrem hoher Geschwindigkeit durchgeführt werden soll. In diesem Fall müßte die Räderanordnung so ausgelegt werden, daß der normalerweise als Abtriebszapfen 20 fungierende Zapfen der Antriebszapfen der Räderanordnung wird.

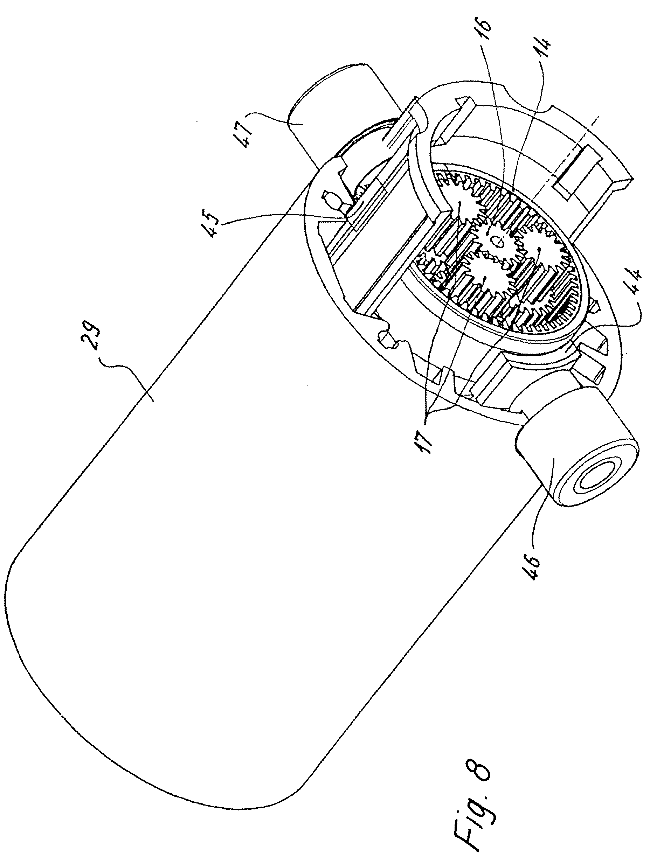

Die zuvor beschriebene, sogenannte Ausrückbarkeit des Antriebes wird anhand der Figur 8 noch näher beschrieben. In einem solchen Fall könnte das Planetengetriebe noch mit einer Regeleinrichtung ausgerüstet werden, um die Geschwindigkeit des zu verstellenden Bauteiles bzw. die Drehzahl der drehfähigen Räder der Räderanordnung zu begrenzen.

Wie die Figur zeigt, ist der Innendurchmesser der Ringnut 24 des Gehäuses 10 kleiner als der der Ringnut 23 des Abtriebsflansches 18. Der Außendurchmesser der Ringnut 24 des Gehäuses 10 ist ebenfalls kleiner als der der Ringnut 23 des Abtriebsflansches 18. Dadurch stützt sich der Führungszapfen 22 an der den Außendurchmesser beschreibenden Fläche der Ringnut 24 des Gehäuses 10 ab. Der Führungszapfen 21 stützt sich an der den Innendurchmesser beschreibenden Fläche der Ringnut 23 des Abtriebsflansches 18 ab, so daß die aufeinander gleitenden Flächen so gering wie möglich gehalten werden, wodurch die Reibung vermindert wird. Diese wird noch zusätzlich vermindert, wenn die Führungszapfen 21, 22 in Lagern geführt sind, die auf die Führungszapfen 21, 22 drehfest aufgesetzt sind.

Vorzugsweise werden aufgrund der geringen Abmessungen dazu Nadellager verwendet. Gemäß der Figur 1 ist der Abtriebsflansch 18 mit dem zweiten Hohlrad 15 verschraubt. Insbesondere bei aus Kunststoff gefertigten Teilen ist es zweckmäßig, wenn das zweite Hohlrad 15 mit dem Abtriebsflansch 18 und dem Antriebszapfen 21 ein einstückiges Formteil bildet.

Wie die Figur 1 zeigt, ist bei der dargestellten Ausführungsform das Drehzahlverhältnis der eingangsseitigen Stufe deutlich kleiner als das Drehzahlverhältnis der ausgangsseitigen Stufe. Auch die Umkehrung ist möglich, so daß dann das Drehzahlverhältnis der eingangsseitigen Stufe größer ist als das der ausgangsseitigen Stufe. Insbesondere bei Planetengetrieben, die relativ geringe Drehmomente übertragen, ist es möglich, daß im Gegensatz zu der dargestellten Ausführung anstelle der miteinander in Eingriff stehenden Zahnräder Reibräder verwendet werden. Im Gegensatz zur dargestellten Ausführung kann der Deckel 11 mit dem Gehäuse 10 verrastet oder verclipst sein. Dies trifft besonders dann zu, wenn der Deckel 11 und das Gehäuse 10 aus Kunststoff bestehen.

Die Führungsansätze 21, 22 sind in, dargestellten Ausführungsbeispiel durch einen in eine Bohrung des Planetenrades 17 fest eingesetzten Bolzen gebildet. Bei Planetenrädern aus Kunststoff werden die Führungsansätze 21, 22 an jedes Planetenrad 17 angespritzt.

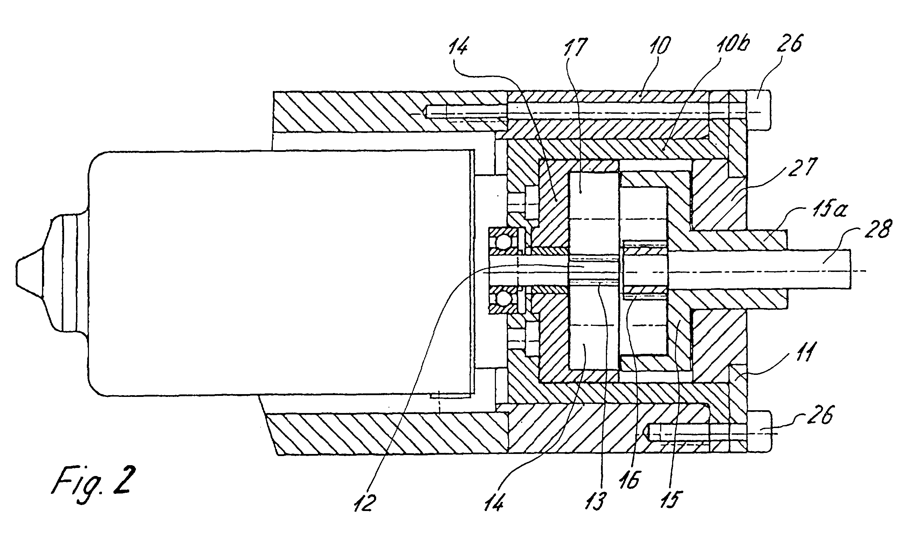

Bei der Ausführung gemäß der Figur 2 ist die Räderanordnung an einem Gehäusetopf 10b angeordnet, der in das Gehäuse 10 eingesetzt ist. Die Räderanordnung besteht aus einem auf den Antriebszapfen 12 drehfest aufgesetzten Sonnenrad 13, einem oder mehreren stufenartig ausgebildeten Planetenrädern 17, dem in der Zentralachse des Planetengetriebes liegenden Stützrad 16, dem eingangsseitigen innenverzahnten Hohlrad 14 und dem abtriebsseitigen, ebenfalls innenverzahnten Hohlrad 15.

Im Gegensatz zu der dargestellten Ausführung könnte der Antriebszapfen 12 selbst das Sonnenrad des Planetengetriebes sein, in dem er entsprechend verzahnt ist. Das Gehäuse ist durch einen ringförmigen Deckel 11 verschlossen, wobei die Befestigungsschrauben 26 gleichzeitig einen nach außen abgewinkelten Flansch des Gehäusetopfes 10b festlegen, da dieser Flansch zwischen der Stirnfläche des Gehäuses 10 und dem Deckel 11 liegt. In die Bohrung des Deckels 11 ist im dargestellten Ausführungsbeispiel eine am äußeren Umfang gestufte Scheibe 27 eingesetzt, so daß auch diese fixiert ist.

Die Bohrung der Scheibe 27 wird von einer Nabe 15a des antriebsseitigen Hohlrades 15 durchdrungen. Im dargestellten Ausführungsbeispiel ist zur Bildung des Sonnenrades 13 der Endbereich der Antriebswelle 12 verzahnt. Dadurch ergeben sich kleine Abmessungen. In die Bohrung des Stützrades 16 ist ein weiterer Abtriebszapfen 28 drehfest eingesetzt. Das Stützrad 16 liegt direkt neben dem Sonnenrad 13. Der Teilkreisdurchmesser des Stützrades 16 ist größer als der des Sonnenrades 13. Daraus ergeben sich entsprechend gestufte Planetenräder 17. Demzufolge ist auch der Teilkreisdurchmesser der Innenverzahnung des antriebsseitigen Hohlrades 14 größer als der des abtriebsseitigen Hohlrades 15. Es ergibt sich aus der Figur 2, daß im Betrieb des Planetengetriebes die Drehzahl des Abtriebszapfens 28 deutlich größer ist als die der Nabe 15a des abtriebsseitigen Hohlrades 15. Der Abtriebszapfen 28 dreht sich um die gleiche Achse wie das Hohlrad 15 und demzufolge auch die Nabe 15a. Der Anwender kann demzufolge entweder den Abtriebszapfen 28 oder die Nabe 15a als Abtriebsglied benutzen. Dadurch wird der Einsatz des Planetengetriebes noch vielfältiger.

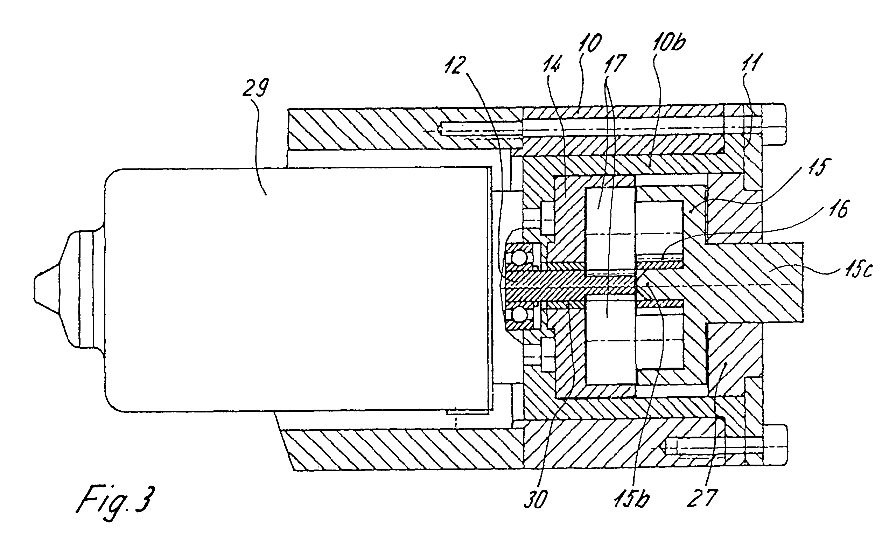

Die in den Figuren 3-7 dargestellten steglosen Planetengetriebe werden von einem den Antriebzapfen 12 aufweisenden Elektromotor 29 angetrieben. Der Antriebszapfen 12 ist mit einer Verzahnung versehen. Entgegen der Darstellung könnte auf den Antriebszapfen 12 auch das antriebsseitige Sonnenrad eines Planetengetriebes drehfest aufgesetzt sein.

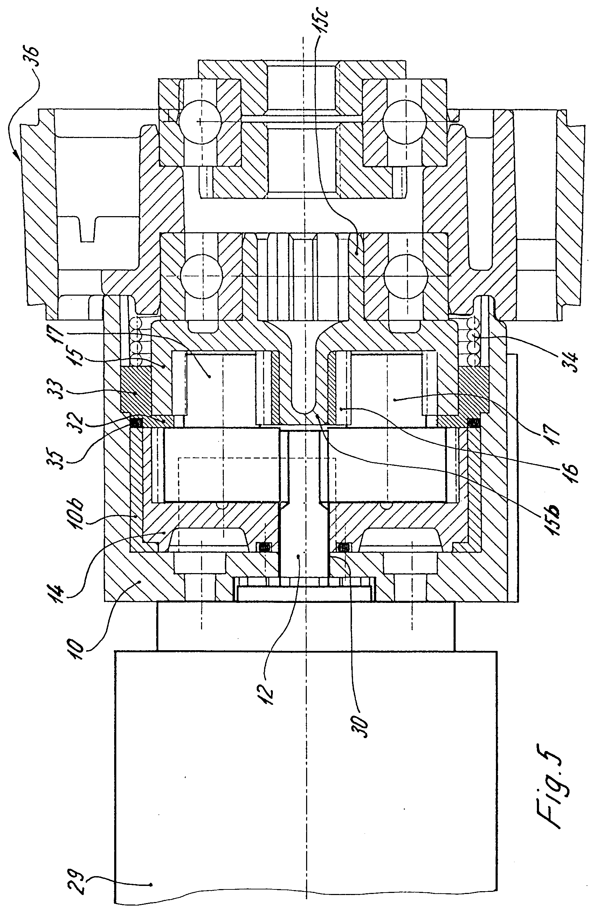

Mittels einer Lagerbuchse 30 ist auf den Antriebszapfen 12 das antriebsseitige Hohlrad 14 gelagert, welches bei der Ausführung nach der Figur 5 mit dem Getriebetopf 10b verbunden ist, so daß es fest steht. Der Gehäusetopf 10b ist schließend in das Getriebegehäuse 10 eingesetzt. Die Verzahnung des Antriebszapfens 12 steht mit den Planetenräder 17 in Eingriff. Die Planetenräder 17 sind ebenfalls gestuft. Die im Durchmesser größeren Bereiche bilden die erste Stufe des Planetenradgetriebes und stehen mit der Innenverzahnung des antriebsseitigen Hohlrades 14 in Eingriff.

An das antriebsseitige Hohlrad 14 schließt sich das abtriebsseitige Hohlrad 15 an, welches mit den Verzahnungen mit kleineren Durchmessern der Planetenräder 17 in Eingriff steht. Außerdem stehen diese Verzahnungen mit dem eine Bohrung aufweisenden Stützrad 16 in Eingriff. Wie die Figur 5 zeigt, erstreckt sich der Antriebszapfen 12 bis an die zugewandte Fläche des Stützrades 16. Wie die Figur 5 deutlich zeigt, ist dieses Stützrad 16 auf einem Zapfen 15b gelagert, der an dem Hohlrad 15 angeformt ist. Dadurch wird die vorstehend beschriebene Räderanordnung stabilisiert, so daß die Reibung vermindert und der Wirkungsgrad des Planetengetriebes entsprechend erhöht wird. An der dem Stützrad 16 gegenüberliegenden Seite ist das Hohlrad 15 noch mit einem zylindrischen Ansatz 15c ausgestattet. Die zugeordnete Seite des Getriebegehäuses 10 ist durch einen ringartigen Deckel 11 und eine Scheibe 27 verschlossen. Der Zapfen 15b des abtriebsseitigen Hohlrades 15 bildet bei dieser Ausführung das Führungselement.

Wie die Figur 3 deutlich zeigt, ist das dem Antriebszapfen 12 zugewandte Ende des Zapfens 15b zur Verminderung der Reibung ballig gestaltet. Dadurch wird eine äußerst kleine Fläche oder eine Punktberührung zwischen den aneinanderliegenden Teilen erreicht.

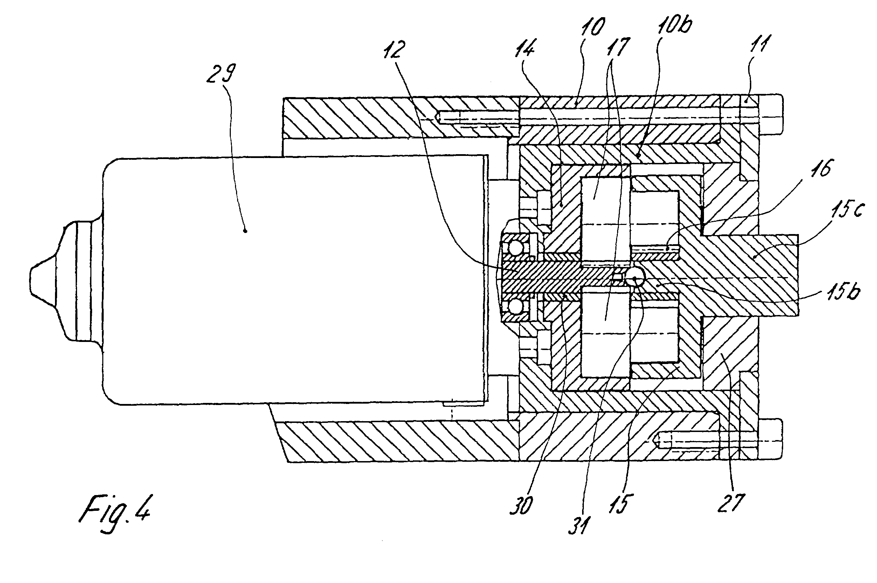

Bei der Ausführung nach der Figur 4 ist der Zapfen 15b mit einer halbkugelförmigen Ausnehmung versehen. In dieser Ausnehmung liegt eine Kugel 31, die aus Metall oder Kunststoff gefertigt sein kann, je nachdem aus welchen Materialien das antriebsseitige Hohlrad 14 gefertigt ist. Auch durch diese Kugel 31, die sich bei Drehung des Motorzapfens 12 des Hohlrades 15 frei bewegen kann, wird eine geringstmögliche Reibung erreicht.

Die Ausführung nach der Figur 5 unterscheidet sich im wesentlichen dadurch, daß der Zapfen 15b des Hohlrades 15 und der zylindrische Ansatz 15c als Hohlteile ausgebildet sind. Außerdem ist die Verzahnung des antriebsseitigen Hohlrades verkürzt, so daß zwischen den beiden Hohlrädern 14 ein Abstandsspalt entsteht. In die-sen Abstandsspalt greift ein Ring 32 ein, der an einer Lagerhülse 33 angesetzt ist, in der zur Stabilisierung der Räderanordnung das abtriebsseitige Hohlrad 15 gelagert ist. Dieser Ring 32 mit der einteiligen Lagerhülse 33 werden durch eine Druckfeder 34 belastet, die an der den, antriebsseitigen Hohlrad 14 abgewandten Seite liegt. Diese Druckfeder 34 umgreift auch noch einen Teil des abtriebsseitigen Hohlrades 15. Die Lagerhülse 33 ist in axialer Richtung beweglich. Auch die mit der Innenverzahnung des abtriebsseitigen Hohlrades 15 in Eingriff stehende Verzahnung der Planetenräder 17 ist in, Bereich des Ringes 32 ausgespart.

Der Außendurchmesser dieses Ringes 32 stimmt mit dem Außendurchmesser des abtriebsseitigen Hohlrades 14 überein. Der Ring 32 wird außerdem von einem Dichtring 35 umhüllt. Die Druckfeder 34 stützt sich einerseits an der Lagerhülse 33 und andererseits an einem nicht näher erläuterten, mit dem Getriebegehäuse 10 verbundenen Anbauteil 36 ab. Die Gestaltung und Auslegung dieses Anbauteiles 36 richtet sich nach dem Verwendungszweck des Planetengetriebes.

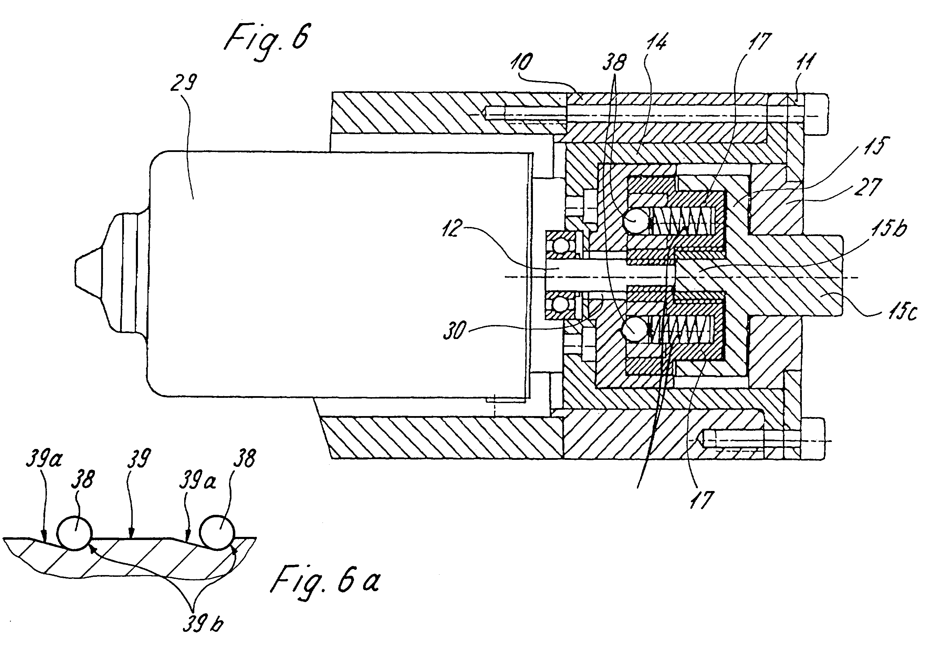

Bei der Ausführung nach den Figuren 6 und 6a sind in dem Planetenrad oder in den Planetenrädern 17 zum antriebsseitigen Hohlrad 14 hin offene, zylindrische Ausnehmungen vorgesehen. In diese zylindrischen Ausnehmungen sind Druckfedern 27 eingesetzt. Diese wirken auf die Kugeln 38, die ein klein wenig gegenüber der dem antriebsseitigen Hohlrad 14 zugewandten Stirnfläche vorstehen. Das antriebsseitige Hohlrad 14 ist mit einer ringförmigen Umlaufbahn 39 für die Kugeln 38 ausgestattet. Diese Umlaufbahn ist in der Figur 6a in der Abwicklung dargestellt. Danach enthält diese Umlaufbahn 39 Flanken 39a mit relativ geringer Steigung bzw. flache Flanken, an die sich Flanken 39b mit größerer Steigung anschließen. Dadurch wird in einer Drehrichtung des Planetengetriebes eine Selbsthemmung erreicht, wenn beispielsweise ein mittels des Planetengetriebes verstelltes Element nach Abschalten des Motors in der jeweiligen Stellung verbleiben soll. Die Kugeln 38 stützen sich dann an den steileren Flanken 39b ab, wodurch eine Selbsthemmung erreicht wird. Beim Antrieb des Motors 39 in einer Richtung, in der ein an das Planetengetriebe angeschlossenes Bauteil angehoben werden soll, werden die Kugeln 38 jeweils über die flacheren Flanken 39a der Umlaufbahn 39 bewegt.

Erfolgt die entgegengesetzte Abwärtsbewegung ebenfalls bei eingeschaltetem Elektromotor 29, werden die Kugeln 38 durch das Einwirken des Drehmomentes entgegen der Wirkung der Druckfedern 37 durch die steileren Flanken 39b nach innen gedrückt. Ansonsten entspricht das Planetengetriebe nach der Figur 6 im wesentlichen den Ausführungen nach den Figuren 3 und 4.

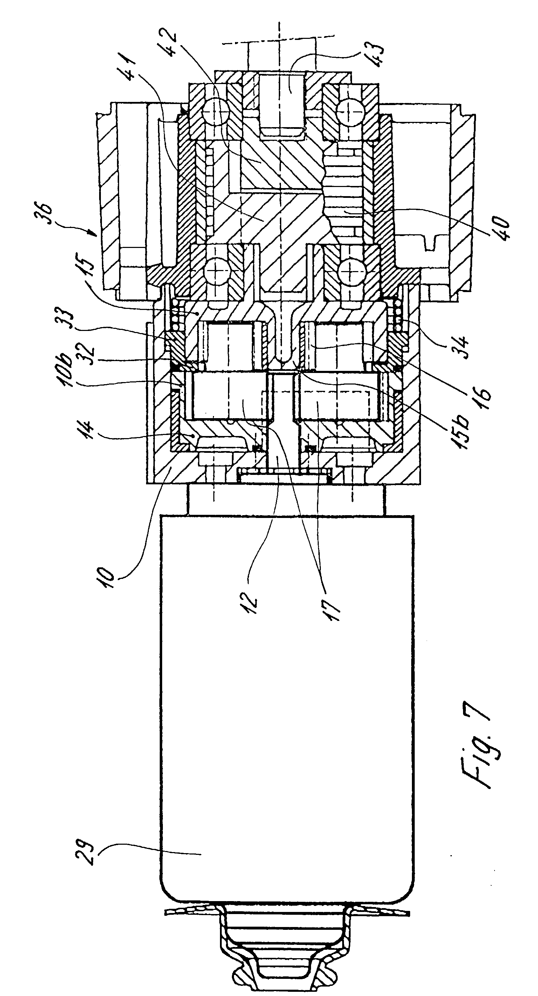

Das in der Figur 7 dargestellte Planetengetriebe ist an die Ausführung nach der Figur 5 angelehnt. Dem abtriebsseitigen Hohlrad 15 ist jedoch ein Bremselement 40 zugeordnet, welches direkt oder indirekt mit dem Hohlrad 15 zusammenwirkt, um das Planetengetriebe in einer Richtung in einer selbsthemmenden Ausführung zu gestalten. Im dargestellten Ausführungsbeispiel ist das Bremselement 40 ein Schlingfederbremselement, welches auf den Umfang eines mit dem abtriebsseitigen Hohlrad 18 fest verbundenen Bremsgliedes 41 einwirkt. Wie die Figur 7 zeigt, sind die Drähte des Schlingfederelementes aus Drähten mit viereckigen, vorzugsweise quadratischen Querschnitten gefertigt. Sie umschlingen das Bremsglied 41 uni einen vorgegebenen Winkel. Dieses Bremsglied 41 ist mit einem Kupplungsstück 42 fest verbunden, welches drehbar in einem Anbauteil 36 gelagert ist. Drehfest mit dem Kupplungsstück 42 ist eine Antriebsspindel 43 verbunden. Diese Antriebsspindel 43 kann eine Spindel mit Spitz- oder Trapezgewinde, eine Kugelumlaufspindel oder dergleichen sein. Ferner könnte zwischen dem Kupplungsstück 42 und der Antriebsspindel 43 eine schaltbare Kupplung zwischengeschaltet werden.

In der Figur 8 ist eine Ausführung des Planetengetriebes mit einer sogenannten Ausrückbarkeit dargestellt. Diese Ausrückbarkeit ist notwendig, um ein Bauteil einer an das Planetengetriebe angeschlossenen Verstelleinheit mit hoher Geschwindigkeit abzusenken. Dazu ist das antriebsseitige Hohlrad 14 drehbar im Getriebegehäuse 10 angeordnet. Im Normalbetriebszustand wird es jedoch durch ein Halteglied festgestzt. Dieses Halteglied besteht im dargestellten Ausführungsbeispiel aus zwei einander gegenüberliegenden Bremsbacken 44 und 45, die durch Bedienelemente 46, 47 außer Kontakt mit dem antriebsseitigen, ersten Hohlrad 14 gebracht werden können. Die Bedienelemente 46, 47 sind so ausgelegt, daß die Bremsbacken noch eine gewisse Bremskraft auf das antriebsseitige Hohlrad 14 ausführen können, wodurch die Absenkgeschwindigkeit des Bauteiles geregelt werden kann.

In nicht dargestellter Weise könnte das abtriebsseitige Hohlrad 15 mittels eines von außen betätigbaren Gestänges außer Eingriff mit den Planetenrädern 17 gebracht werden, um beispielsweise durch das bereits erwähnte Ausrücken ein angeschlossenes Bauteil mit einer wesentlich größeren Geschwindigkeit abzusenken, als wenn dieses bei eingeschaltetem Motor 29 erfolgen würde. Dieses Ausrückgestänge könnte federbelastet sein, um das abtriebsseitige Hohlrad 15 wieder in Eingriff mit dem antriebsseitigen Hohlrad 14 und den Planetenrädern 17 zu bringen.

Die Erfindung ist nicht auf die dargestellten Ausführungsbeispiele beschränkt.

In ebenfalls nicht dargestellter Weise könnte das abtriebsseitige Hohlrad 15 gegenüber den Drehachsen des Antriebszapfens 12 und des Stützrades 16 versetzt sein bzw. exzentrisch dazu stehen. Auch dieses Planetengetriebe ist wiederum mit einem Planetenrad 17 oder mit mehreren Planetenrädern 17 ausgestattet. Das abtriebsseitige Hohlrad 15 führt dann eine exzentrische Bewegung aus, die beispielsweise in eine lineare Hin- und Herbewegung umgesetzt werden könnte. Dadurch wird das Einsatzgebiet des erfindungsgemäßen Planetengetriebes noch erweitert. Wesentlich sind bei diesen Getrieben die der Stabilisierung der das Stützrad 16 aufweisenden Räderanordnung dienenden Bauelemente.

## Patentansprüche

**1.** Planetengetriebe mit einem feststehenden Getriebegehäuse, welches durch einen Deckel verschlossen ist, mit einem rotierend antreibbaren Sonnenrad, dessen Drehachse die Zentralachse des Getriebes bildet, mit einem feststehenden antriebsseitigen und mit einer Innenverzahnung versehenen Hohlrad und einem drehbaren, abtriebsseitigen und mit einer Innenverzahnung versehenen Hohlrad, sowie mindestens einem mit den Hohlrädern und dem Sonnenrad in Eingriff stehenden Planetenrad und mit einem mit seiner Längsachse in der Zentralachse des Planetengetriebes liegenden Stützrad, welches mit dem Planetenrad oder mit mehreren Planetenrädern in Eingriff steht, **dadurch gekennzeichnet,** daß dem abtriebsseitigen Hohlrad 15 an der dem Sonnenrad (13) der Räderanordnung zugewandten Seite ein in die Bohrung des Stützrades (16) eingreifender Zapfen (15b, 28) zugeordnet ist, auf dem das Stützrad (16) frei drehbar oder drehfest gelagert ist.

**2.** Planetengetriebe mit einem feststehenden Getriebegehäuse, welches durch einen Deckel verschlossen ist, mit einem rotierend antreibbaren Sonnenrad, dessen Drehachse die Zentralachse des Getriebes bildet, mit einem feststehenden antriebsseitigen und mit einer Innenverzahnung versehenen Hohlrad und einem drehbaren, abtriebsseitigen und mit einer Innenverzahnung versehenen Hohlrad, sowie mindestens einem mit den Hohlrädern und dem Sonnenrad in Eingriff stehendem Planetenrad und mit einem mit seiner Längsachse in der Zentralachse des Planetengetriebes liegenden Stützrad, welches mit dem Planetenrad oder mit mehreren Planetenrädern in Eingriff steht, **dadurch gekennzeichnet,** daß jedes Planetenrad (17) zumindest an der dem Abtriebsflansch (18) zugewandten Seite einen vorstehenden Führungszapfen (21) aufweist, vorzugsweise jedoch an beiden Stirnseiten einen vorstehenden Führungszapfen (21, 22) aufweist, die in Ringnuten (23, 24) des Abtriebsflansches (18) und des Bodens des Gehäuses (10) geführt sind.

**3.** Planetengetriebe nach Anspruch 1 oder 2, **dadurch gekennzeichnet,** daß in die Bohrung des losen Stützrades (16) ein Abtriebszapfen (28) drehfest eingesetzt ist, der vorzugsweise im abtriebsseitigen Hohlrad (15) drehbar gelagert ist und dessen freies Ende gegenüber dem freien Ende einer Nabe (15a) des abtriebsseitigen Hohlrades (15) vorsteht.

**4.** Planetengetriebe nach einem oder mehreren der vorhergehenden Ansprüche 1-3, **dadurch gekennzeichnet,** daß die Räder der in sich geschlossenen Räderkette als Reibräder ausgebildet sind.

**4.** Planetengetriebe nach einem oder mehreren der vorhergehenden Ansprüche 1-4, **dadurch gekennzeichnet,** daß das Planetengetriebe und/oder der das Planetengetriebe antreibende Antriebsmotor (29) mit jeweils einer Bremse ausgerüstet ist, der vorzugsweise eine die Bremskraft steuernde Regeleinrichtung zugeordnet ist.

**6.** Planetengetriebe nach einem oder mehreren der vorhergehenden Ansprüche 1-5, **dadurch gekennzeichnet,** daß innerhalb der in sich geschlossenen Räderanordnung eines der Räder (13-17) bei der Umkehr der Drehrichtung als Blockierglied ausgebildet ist.

**7.** Planetengetriebe nach einem oder mehreren der vorhergehenden Ansprüche 1 - 6, **dadurch gekennzeichnet,** daß das abtriebsseitige Hohlrad (15) an der dem antriebsseitigen Hohlrad (14) zugewandten Seite einen vorstehenden und hohl ausgebildeten Ansatz (15c) aufweist, auf den ein Wälzlager aufgesetzt ist.

**8.** Planetengetriebe nach einem oder mehreren der vorhergehenden Ansprüche 1-7, **dadurch gekennzeichnet,** daß jedes Planetenrad (17) eine zum antriebsseitigen Hohlrad (14) offene Ausnehmung aufweist, in die eine durch eine Druckfeder (37) belastete Kugel (38) teilweise eingreift, und daß das antriebsseitige Hohlrad (14) an dieser Seite eine profilierte Umlaufbahn (39) für die Kugel (38) oder für die Kugeln (38) aufweist.

**9.** Planetengetriebe nach einem oder mehreren der vorhergehenden Ansprüche 1-8, **dadurch gekennzeichnet,** daß dem abtriebsseitigen Hohlrad (15) ein Bremselement, insbesondere ein Schlingfederbremselement (40) zugeordnet ist, welches vorzugsweise auf der Umlangsfläche eines mit dem abtriebsseitigen Hohlrad (15 ) drehfest verbundenen Bremsgliedes (41) angreift.

**10.** Planetengetriebe nach einem oder mehreren der vorhergehenden Ansprüche 1-9, **dadurch gekennzeichnet,** daß das antriebsseitige Hohlrad (14) drehbar im Gehäuse (10) gelagert ist, jedoch mittels eines Haltegliedes (44, 45) im Normalbetriebszustand festgesetzt ist und zur Ausrückbarkeit des Planetengetriebes mit einer gesteuerten Bremskraft die Drehung zuläßt.
